# EUROPEAN PATENT APPLICATION

(11) **EP 2 629 576 A1**
(43) Date of publication of application: **21.08.2013**
(21) Application number: 13155239.0
(22) Date of filing: 14.02.2013
(51) Int. Cl.: H04W 64/00, H04W 84/12

(54) **Method and apparatus for positioning location of wireless access point**

(30) Priority: 17.02.2012 KR 20120016234
(71) Applicant: Samsung Electronics Co., Ltd, Gyeonggi-do 443-742 (KR)
(72) Inventor: Ku, Sang-Chul, Gyeonggi-do (KR); Park, Chan-Hyoung, Gyeonggi-do (KR); Ban, Ji-Hye, Gyeonggi-do (KR); Shin, Gye-Joong, Gyeonggi-do (KR); Chung, Do-Hyoung, Seoul (KR)
(74) Representative: Nederlandsch Octrooibureau

(57) **Abstract**

A wireless access point location positioning method and terminal operation method for floor information update. A method includes a terminal acquiring absolute location information, and transmitting surrounding Access Point (AP) signal information of an absolute location, together with the absolute location information, to a location server. The location server includes receiving surrounding AP signal information of the absolute location and associated atmospheric pressure information thereof, together with the absolute location information, from a terminal, determining locations of APs based on the received absolute location information and the surrounding AP signal information of the absolute location, and updating a related AP location using the determined locations of the APs.

## Description

### BACKGROUND OF THE INVENTION

### 1. Field of the Invention

The present invention relates to positioning the location of a wireless Access Point (AP). More particularly, the present invention relates to a method and apparatus for positioning the location of an indoor wireless AP in an electronic device.

### 2. Description of the Related Art

A Location Based System (LBS) is an application system and service for determining an exact optimal grasp location of people or things based on a wired and/or wireless communication network and using the communication network. In other words, the LBS is a service technology for real-time tracking the location of a subscriber of a mobile communication terminal such as a notebook computer, a Personal Digital Assistant (PDA), a cellular phone and the like, using a location positioning technology, and providing the tracked location to the user. If a terminal user requests location from a mobile communication network using a terminal in which location provision is possible, the LBS works in conjunction with a Geographic Information System (GIS) displays a positioning result value on a map or providing surrounding information using various location positioning determination technologies.

As configuration elements are a key technology of the LBS, there is a location positioning technology for grasping a location in a mobile communication network, a core platform technology and application based technology for management of location data includes facility information of a base station and an AP, and the like. Here, as the most core location positioning technology, there are: a cell IDentifier (ID) using mobile communication network - based information, a cell header, a handset-based Assisted - Global Positioning System (A-GPS) scheme and the like. Also, there is a Wireless Local Area Network (WLAN) - based Wireless fidelity Positioning System (WPS) scheme is becoming more common , and the like. The WPS comprises a technology in which a terminal receives parameters (i.e., a Media Access Control (MAC) address, a signal strength and the like) of a Radio Frequency (RF) signal radiated from an AP, and a WPS server determines the location of a user using a technology of location positioning determination between the terminal and the system, and provides the determined location of the user to the terminal.

To realize the WPS, it is important to realize a positioning algorithm of collecting and analyzing AP information and utilizing the collected/analyzed AP information.

However, due to the many instances in which the location of a wireless AP (or APS) within a building is changed by a user or manager, the use of a WPS is not suitable for positioning a location within the building.

### SUMMARY OF THE INVENTION

An exemplary aspect of the present invention is to substantially solve at least some of the above problems and/or disadvantages and to provide at least the advantages below. Accordingly, an exemplary aspect of the present invention is to provide a method and apparatus for positioning the location of a wireless Access Point (AP).

Another exemplary aspect of the present invention is to provide a method and apparatus for automatically updating location information of a wireless AP within a building without a manager or user manually updating the location information.

A further exemplary aspect of the present invention is to provide a method and apparatus for providing accurate floor information using AP signal information and atmospheric pressure information that are searched in absolute location.

The above exemplary aspects are achieved by providing a method and apparatus for positioning the location of a wireless access point.

According to another exemplary aspect of the present invention, a method for providing location information of a wireless AP in an electronic device preferably includes acquiring absolute location information of the electronic device, and transmitting to one or more surrounding APs (i.e. APs within a predefined area or communicative transmission range of the electronic device) the signal information of an absolute location, together with the absolute location information, to a location server. "Absolute location" is a way of describing the position of an object or place on the surface of the Earth using a recognized coordinate system.

According to another exemplary aspect of the present invention, a method for providing floor atmospheric pressure information of an electronic device is provided. The method preferably includes acquiring absolute location information of the electronic device and atmospheric pressure information thereof, and transmitting the absolute location information and atmospheric pressure information to a location server.

According to another exemplary aspect of the present invention, a method for updating wireless AP location positioning and floor information in a server is provided. The method preferably includes receiving at least one or more of surrounding AP signal information of an absolute location and atmospheric pressure information thereof, together with absolute location information, from a terminal, determining locations of APs based on the received absolute location information and the surrounding AP signal information of the absolute location, and updating a related AP location using the determined locations of the APs.

In exemplary embodiment of the present invention, determining the locations of the APs based on the received absolute location information and AP signal information of the at least one AP within communication range of the absolute location comprises determining the locations of the APs by combining the received absolute location information and the AP signal information collected in the absolute location.

In exemplary embodiment of the present invention, the method further includes updating floor atmospheric pressure information, based on the absolute location information of the terminal and the atmospheric pressure information monitored by the terminal.

In exemplary embodiment of the present invention, the method further includes receiving by a location server a request for location information from the terminal and determining by the location server the location of the terminal based on AP signal information within communication range of the terminal, and providing the determined location of the terminal to the terminal.

In exemplary embodiment of the present invention, the method further includes providing location information of the electronic device corresponding to the absolute location, to the terminal.

According to yet another exemplary aspect of the present invention, an electronic device includes one or more processors (or microprocessors comprising hardware) that execute machine readable instructions, a non-transitory memory for storing data and instructions, and one or more programs stored in the memory and configured for execution by the one or more processors or microprocessors. The program includes instructions of acquiring absolute location information of the electronic device, and transmitting surrounding AP signal information of an absolute location, together with the absolute location information, to a location server.

According to still another exemplary aspect of the present invention, an electronic device includes at least one processor or microprocessor that execute machine readable instructions, a memory for storing data and instructions, and one or more programs stored in the memory and configured to be executed by the one or more processors or microprocessors. The program includes instructions of acquiring absolute location information of the electronic device and atmospheric pressure information thereof, and transmitting the absolute location information and atmospheric pressure information, to a location server.

According to still another exemplary aspect of the present invention, a server apparatus for updating wireless AP location positioning and floor information is provided. The apparatus includes a controller and an update unit. The controller receives at least one or more of surrounding AP signal information of an absolute location and atmospheric pressure information thereof, together with absolute location information, from a terminal, and determines locations of APs based on the received absolute location information and the surrounding AP signal information of the absolute location. The update unit updates a related AP location using the determined locations of the APs.

### BRIEF DESCRIPTION OF THE DRAWINGS

The above and other exemplary objects, features and advantages of the present invention will become more apparent to a person of ordinary skill in the art from the following detailed description when taken in conjunction with the accompanying drawings in which:
FIG. 1 is a flow diagram illustrating exemplary operation of a process of Access Point (AP) location positioning and floor atmospheric pressure information acquisition according to a first exemplary embodiment of the present invention;
FIG. 2 is a flow diagram illustrating exemplary operation of a process of AP location positioning and floor atmospheric pressure information acquisition according to a second exemplary embodiment of the present invention;
FIG. 3 is a flow diagram illustrating exemplary operation of a process of AP location positioning and floor atmospheric pressure information acquisition according to a third exemplary embodiment of the present invention;
FIG. 4 is a flowchart illustrating exemplary operational procedure of a server according to an exemplary embodiment of the present invention;
FIG. 5 is a flowchart illustrating an exemplary operational procedure of a terminal according to an exemplary embodiment of the present invention;
FIG. 6 is a block diagram illustrating an exemplary construction of a terminal apparatus according to an exemplary embodiment of the present invention; and
FIG. 7 is a block diagram illustrating an exemplary construction of a server apparatus according to an exemplary embodiment of the present invention.

**DETAILED DESCRIPTION**

Preferred exemplary embodiments of the present invention will be described herein below with reference to the accompanying drawings. In the following description, well-known functions or constructions may not be described in detail when their inclusion would obscure appreciation of the invention by a person of ordinary skill in the art with description of such well-known functions and structures. In addition, terms described below, which are defined considering functions in the present invention, can be different depending on a user and/or operator's intention or practice. Therefore, the terms should be defined on the basis of the disclosure throughout this specification.

In order to assist the artisan with appreciation of the claimed invention, the term "floor information" means a floor, in which a corresponding terminal is located, of a corresponding building

The present invention relates to a method and apparatus for positioning the location of an indoor wireless AP through a benchmark absolute location.

A method and apparatus for positioning the location of a wireless Access Point (AP) according to the present invention are described below.

More particularly, the present invention provides a technology for automatically positioning the location of an indoor wireless AP based on an absolute location of a terminal user, and automatically updating changed location information of the indoor wireless AP. Here, the absolute location of the user's terminal is a location obtained through a Quick Response (QR) code located indoors, a Radio Frequency (RF) - reader (e.g., Near Field Communication (NFC)), an RF IDentification (RFID), a card reader or the like. The location of the QR code, the RF reader, or the card reader is stored in a database can be couple to the location information server.

Also, the present invention provides a technology for automatically measuring and updating the atmospheric pressure inside an indoor area based on an absolute location of a user terminal, which is acquired using a QR code, an RF reader, or a card reader

Below, a place where a QR code, an RF tag, a card reader and the like are installed inside an indoor is used as an absolute location of a user, and the absolute location is stored in a database and managed in a server.

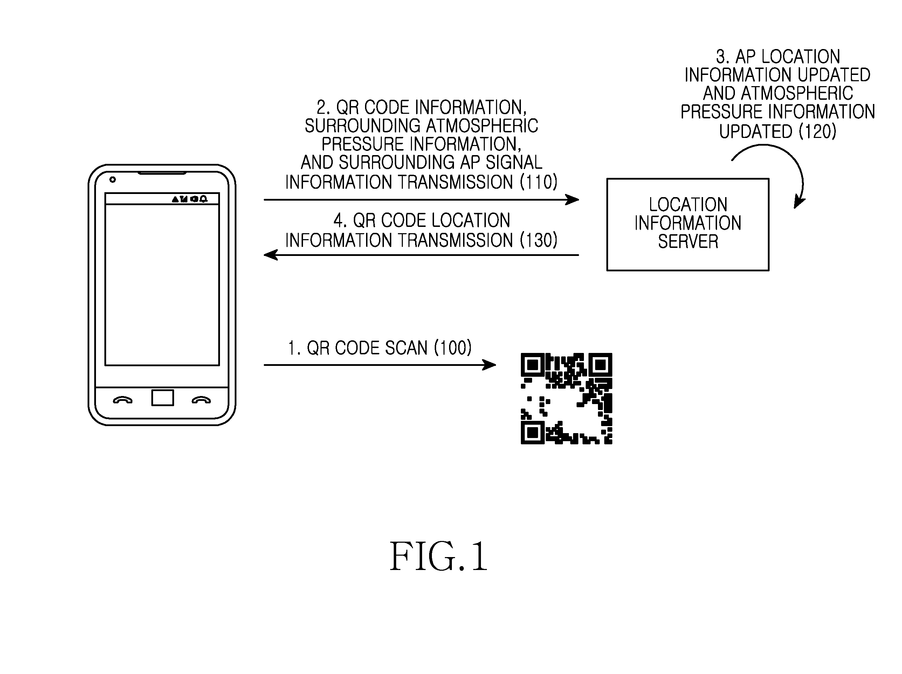

FIG. 1 is a flow diagram illustrating an exemplary process of AP location positioning and floor atmospheric pressure information acquisition according to a first exemplary embodiment of the present invention.

Referring now to FIG. 1, at step (100) a terminal scans a corresponding QR code attached to something in an indoor through a QR code recognition application of the terminal.

After that, at step (110) the terminal obtains and provides atmospheric pressure information sensed through a sensor of the terminal and surrounding AP signal information, together with the scanned QR code, to a location information server. The AP signal information can include a signal strength of a wireless AP, a Service Set IDentifier (SSID) that is a unique name of the wireless AP, a Media Access Control (MAC) address and the like. The scanned QR code is used as an absolute location of the user terminal. The absolute location refers to the location of a fixed point.

Next, at step (120) the location information server updates AP location information and floor information using the QR code collected from the terminal, the atmospheric pressure information sensed through the sensor of the terminal, and the surrounding AP signal information. Here, the QR code and the surrounding AP signal information are used for updating the AP location information at the location information server, and the atmospheric pressure information sensed through the sensor of the terminal is used for updating the floor information.

An algorithm for determining AP location can be variously realized in a number of ways and the aforementioned does not limit the scope and spirit of the presently claimed invention. For example, the AP location can be determined or updated through a combination of QR code information indicating an absolute location information of a plurality of terminals and each signal strength of surrounding APs which are collected in each absolute location of a terminals.

At step (130), the location information server retrieves location information corresponding to the QR code received from the terminal and provides the retrieved QR-code location information to the terminal.

In another implementation of the presently claimed invention, at (step 130) the location information server may determine a position of the location of a user terminal based on a determined or updated AP location in place of the location information corresponding to the received QR code, and provide its result to the terminal. For example, the location information server can estimate the location of the terminal using a triangulation.

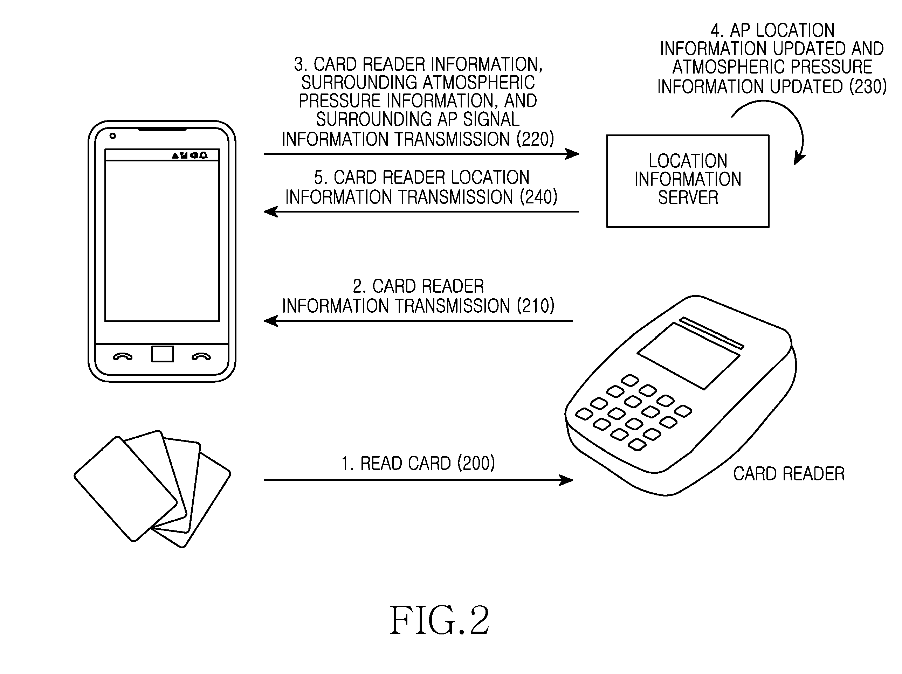

FIG. 2 is a flow diagram illustrating an exemplary operational process of AP location positioning and floor atmospheric pressure information acquisition according to a second exemplary embodiment of the present invention.

Referring now to FIG. 2, at step (200) when goods are purchased paid for with a credit card that is read by a card reader, for example, in a shop inside a building, then at step (210) the card reader transmits payment contents of the card reader to a user terminal through a management server for the card reader.

Subsequently, at step (220), the terminal provides atmospheric pressure information sensed through a sensor of the terminal and surrounding AP signal information, together with information about the card reader (e.g. ID or name of the card reader), to a location information server. The AP signal information can include a signal strength of a wireless AP, an SSID that is a unique name of the wireless AP, a MAC address and the like. The information about the card reader is used as an absolute location of the user's terminal.

Next at step (230), the location information server updates AP location information and floor information using at least one of: (1) the information about the card reader collected from the terminal, the (2) atmospheric pressure information sensed through the sensor of the terminal, and (3) the surrounding AP signal information. Here, the information about the card reader and the surrounding AP signal information are used for updating the AP location information and providing the information about the card reader and the surrounding AP signal information to the location information server. The atmospheric pressure information detected by the sensor of the terminal is used for updating the floor information.

An algorithm for determining an AP's location can be embodied in a number of ways and the description herein does not limit the scope and spirit of the presently claimed invention. For example, the AP location can be determined or updated through a combination of information about a card reader indicating absolute location information of a plurality of terminals and each signal strength of surrounding APs which are collected in each absolute location of terminals.

At step (240), the location information server retrieves location information corresponding to the information about the card reader received from the terminal and provides the retrieved card-reader location information to the terminal.

In another implementation of step (240), the location information server may position the location of a user terminal based on a determined or updated AP location in place of the location information corresponding to the received information about the card reader, and then at step (240) provide its result to the terminal. For one example, the location information server can estimate the location of the terminal using a triangulation.

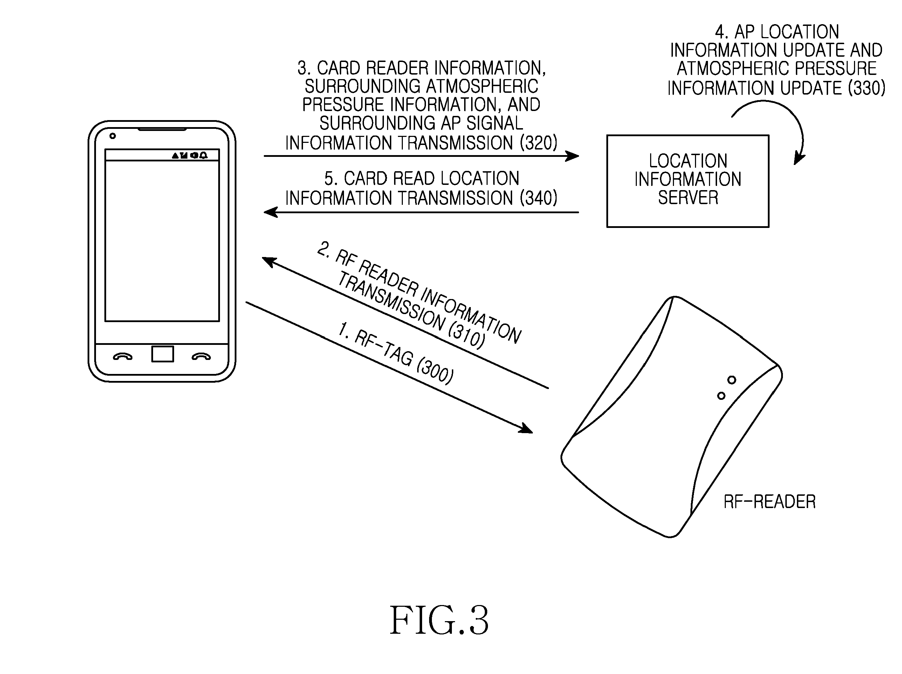

FIG. 3 is a flow diagram illustrating exemplary operation of a process of AP location positioning and floor atmospheric pressure information acquisition according to a third exemplary embodiment of the present invention.

Referring now to FIG. 3, at step (300) when a user brings an RF tag within a user terminal (a user terminal including an RF tag) into contact (not limited to physical contact, includes radio transmission range) with an RF reader or approaches the RF reader with the RF tag approach (step 300), the RF reader reads the RF tag and step (310) transmits information about the RF reader to the terminal.

At step (320), the terminal provides atmospheric pressure information sensed through a sensor of the terminal and surrounding AP signal information, together with the information about the RF reader, to a location information server. The AP signal information may preferably include a signal strength of a wireless AP, an SSID that is a unique name of the wireless AP, a MAC address and the like. The information about the RF reader is used as an absolute location of the user terminal.

Next, at step (330), the location information server updates AP location information and floor information using the information about the RF reader collected from the terminal, the atmospheric pressure information sensed through the sensor of the terminal, and the surrounding AP signal information. Here, the information about the RF reader and the surrounding AP signal information are used for updating the AP location information, and the atmospheric pressure information sensed through the sensor of the terminal is used for updating the floor information.

An algorithm of determining AP location according to the present invention can be realized in a number of ways and any description herein does not limit the scope and spirit of the presently claimed invention to the examples shown and described. For example, the AP location can be determined or updated by estimating a signal strength of an AP varying depending on location through a combination of information about an RF reader indicating absolute location information of a plurality of terminals and pieces of surrounding AP signal information which are collected in an absolute location.

At step (340), the location information server retrieves location information corresponding to the information about the RF reader received from the terminal and provides the retrieved RF-reader location information to the terminal.

In another implementation of step (340), the location information server may position the location of a user terminal based on a determined or updated AP location in place of the location information corresponding to the received information about the RF reader, and provide its result to the terminal. For example, the location information server can estimate the location of the terminal using a triangulation.

As described earlier in the first exemplary embodiment to the third exemplary embodiment, the location information server determines a terminal location based on an absolute location received from a terminal, compares AP signal information within a predetermined range of the terminal received from the terminal with the location of a wireless AP stored in a database, and updates the AP location or adds a new one. Accordingly, the location information server can automatically database and manage the location of the wireless AP without a regular search for the wireless AP.

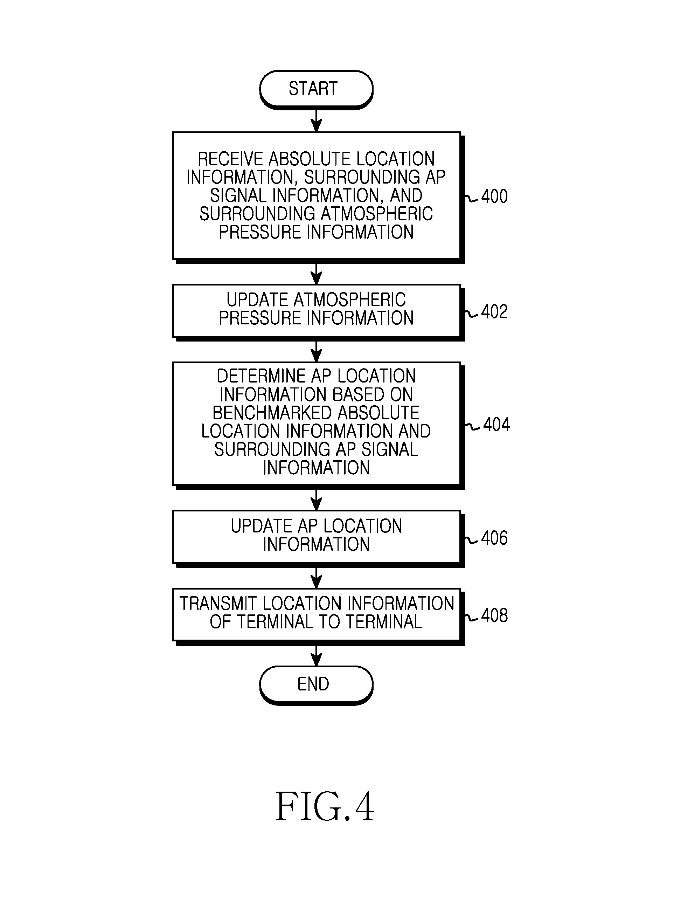

FIG. 4 is a flowchart illustrating an exemplary operational procedure of a server according to an exemplary embodiment of the present invention.

Referring now to FIG. 4, in step (400), the server receives from a plurality of terminals the respective absolute location information, AP signal information around a plurality of terminals, and atmospheric pressure information around them,. The absolute location is a point in which a QR code, an RF reader or a card reader is located.

At step 402, the server updates or adds atmospheric pressure information corresponding to the absolute location information received from the one or more of the plurality terminals. If information on a specific floor of a specific building is included in the absolute location information, atmospheric pressure information of the specific floor of the specific building is updated and stored in a database as an atmospheric pressure detected through a sensor of the terminal._

Next, in step 404, the server determines AP location information based on the absolute location information and the surrounding AP signal information. In other words, in an exemplary aspect of the present invention, the location information server determines AP location by estimating a signal strength of an AP varying depending on location through a combination of the absolute location information and the pieces of surrounding AP signal information which are collected in an absolute location.

At step (406), the location information server compares the determined AP location information with existing AP location information stored in a database and, when there is an AP location change, updates the AP location information.

Next, in step (408), the server determines the location of the terminal using a triangulation based on the AP signal information around the terminal, which has requested its own location information, and provides determined location information of the terminal to the terminal.

After that, the server terminates the procedure of the present invention.

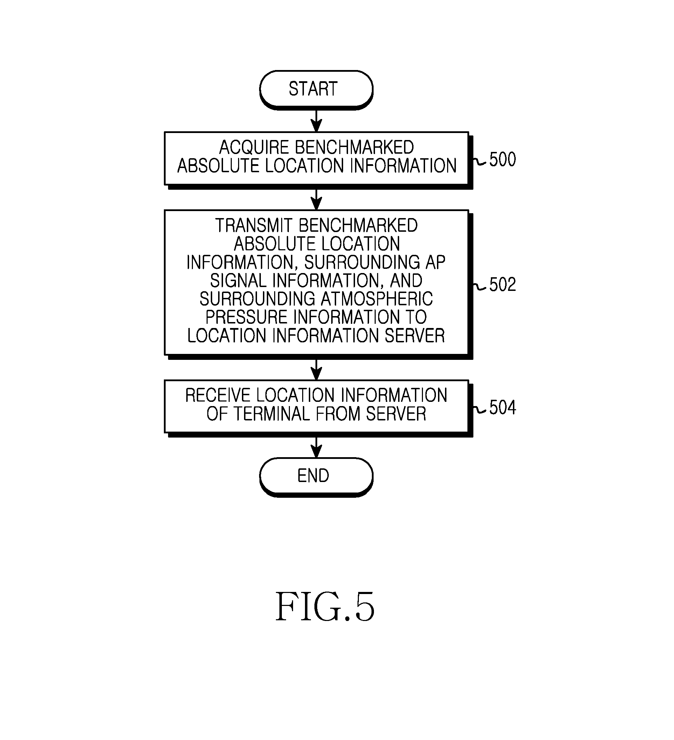

FIG. 5 is a flowchart illustrating an exemplary operation procedure of a terminal according to an exemplary embodiment of the present invention.

Referring now to FIG. 5, in step (500), the terminal acquires absolute location information from a QR code, an RF reader, or a card reader. The absolute location information, which is location information of a point in which the QR code, the RF reader, or the card reader is located. Alternatively, the absolute location information may be the scanned QR code or information about the RF reader or card reader (e.g. ID or name of a RF reader for card reader) received from the RF reader or a management server of card reader.

At step (502), the terminal transmits to a server the scanned QR code or RF reader or card reader information indicating an absolute location, and AP signal information and atmospheric pressure information around the absolute location. The AP signal information can include a signal strength of a wireless AP, an SSID that is a unique name of the wireless AP, a MAC address and the like.

At step (504), the terminal receives its own location information including floor information from the location information server. The terminal location information is determined by the server based on the absolute location information and the AP signal information around the absolute location. If necessary, or according to predetermined criteria is desired, AP location is updated, and the location of the terminal is determined based on information of the updated AP location. Further, the server receives the atmospheric pressure information corresponding to the absolute location from the terminal and determines the floor information of the terminal from floor information stored in a database.

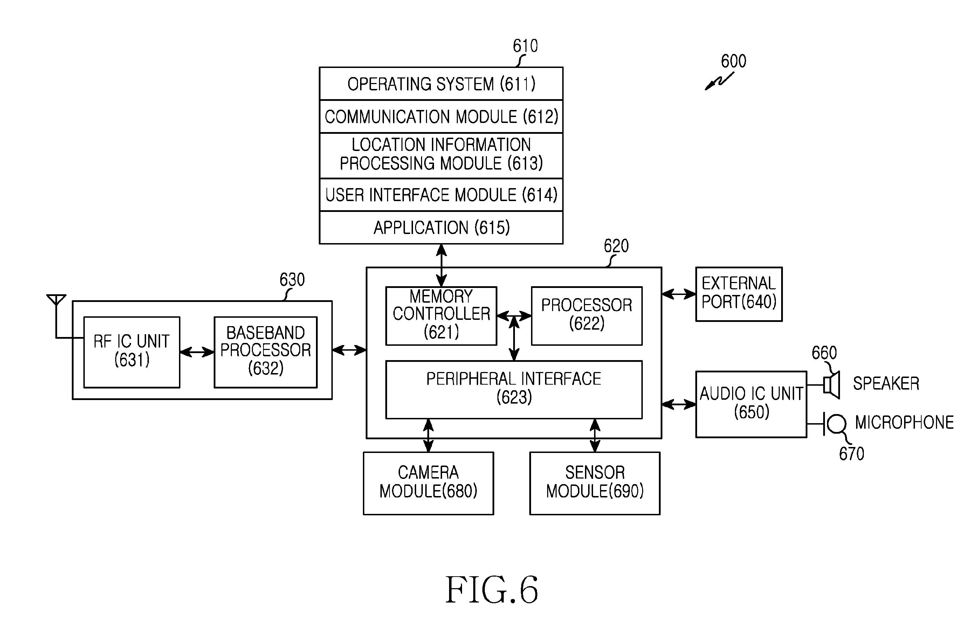

FIG. 6 illustrates an exemplary construction of a portable electronic device according to an exemplary embodiment of the present invention.

The portable electronic device 600 according to this example of the present invention is a device such as a portable terminal, a mobile phone, a media pad, a media player, a tablet computer, a handheld computer, a Personal Digital Assistant (PDA) or the like. Also, the portable electronic device 600 may be any portable electronic device including a device combining two or more functions among these devices, just to name a few of the many possibilities.

The portable electronic device 600 is comprised of hardware including a memory 610, a processor unit 620, a communication unit 630, an external port 640, an audio Integrated Circuit (IC) unit 650, a speaker 660, a microphone 670, a camera module 680, and a sensor module 690. The memory 610 and the external port 640 each may comprise more than one memory or more than one external port.

Here, the processor unit 620 includes a memory controller 621, a processor (or a Central Processing Unit (CPU)) 622, and a peripheral interface 623. Here, the processor 622 can be one or more. The communication unit 630 includes an RF IC unit 631 and a baseband processor 632. The processor may be a microprocessor. These configuration items may communicate with each other through one or more communication buses or signal lines (not denoted by reference numeral), respectively.

The configuration items may realize a function by hardware such as one or more ICs or software loaded into a processor so as to provide a statutory machine, and may also realize certain functions by a combination of hardware programmed with software and/or firmware.

The portable electronic device 600 illustrated in FIG. 6 is one such example. of an apparatus with configuration elements, and in practice may have more or less configuration elements than illustrated herein. Also, the portable electronic device 600 may be configured in a scheme different from illustrated.

Each of the configuration elements included in the portable electronic device 600 is described as follows.

The memory 610 includes a non-transitory memory such as a Random Access Memory (RAM), a nonvolatile memory including a flash memory, a Read Only Memory (ROM), an Electrically Erasable Programmable ROM (EEPROM), a magnetic disk storage device, a Compact Disk ROM (CD-ROM), a Digital Versatile Disk (DVD) or an optical storage device of other form, and a magnetic cassette, just to name of few of the many possibilities. Or, the memory 610 can be configured by a combination of some or all of the aforementioned items. Also, there can be more than one configuration memory.

Also, the memory 610 may further include an attachable storage device accessible to the portable electronic device 600 through a communication network such as the Internet, an intranet, a Local Area Network (LAN), a Wireless LAN (WLAN) or a Storage Area Network (SAN), or through a communication network configured by a combination of such networks. This storage device may access the electronic device 600 through the external port 640. Also, a separate storage device on a communication network may access the portable electronic device 600 through the RF IC unit 631.

The memory 610 stores software. A software configuration includes an operating system software 611 stored on the memory 610, a communication module software 612, a location information processing module 613, a user interface module614, and one or more applications 615.

The operating system 611 (for example, a built-in operating system such as WINDOWS, LINUX, Darwin, RTXC, UNIX, OS X, or VxWorks) includes various software configuration elements controlling the general system operation. This controlling of the general system operation signifies, for example, memory management and control, storage hardware (device) control and management, power control and management, and the like. The operating system 611 performs a function of making smooth communication between various hardware (devices) and other elements.

The communication module 612 includes various configuration elements for processing data transmission and data reception through the RF IC unit 631 or the external port 640.

The location information processing module 613 includes various configuration elements for, upon scanning a QR code through the camera module 680, contact with an RF reader through an RF tag module (not shown), or card payment through a card reader, supporting AP location update and floor information update based on absolute location information corresponding to information about the RF reader or card reader received through the RF IC unit 631. For instance, the location information processing module 613 includes a configuration element for controlling terminal operation for AP location information update and floor information update illustrated in FIG. 5.

The user interface module 614 includes various configuration elements related to a user interface. The user interface module 614 includes information about how a state of the user interface is changed, whether the change of the state of the user interface is made in any condition, or the like.

The application 615 preferably includes a browser, an electronic mail (e-mail), an instant message, word processing, keyboard emulation, an address book, a touch list, a widget, a JAVA enable application, coding, Digital Right Management (DRM), voice recognition, voice replication, a position determining function, a location based service, a music player and the like.

When other configuration elements such as the processor 622 or the peripheral interface 623 included in the processor unit 620 gain access to the memory 610 through the memory controller 621, they take charge of controlling the memory 610. Also, the processor 622 executes the modules included in the memory 610. The processor 622 performs an overall control function in executing a function of the portable electronic device 600. A function of the memory controller 621 may be included in the processor 622. In some cases, the whole processor unit 620 is called a processor. Further to the present invention, the processor 622 performs a function of controlling terminal operation illustrated in FIG. 5.

The external port 640 refers to, for example, a Universal Serial Bus (USB) port, a FIREWIRE port and the like, but the external port 640 is not limited to such examples. The external port 640 is used preferably for direct connecting the portable electronic device 600 to other electronic devices or indirectly connecting the portable electronic device 600 to other electronic devices through a network (e.g., the Internet, an Intranet, a WLAN and the like).

With continued reference to FIG. 6, the peripheral interface 623 connects Input/Output (I/O) peripheral devices of the portable electronic device 600 to the processor 622 and the memory 610 that is under control of the memory controller 621. The portable electronic device 600 may include a plurality of processors 622. For instance, the peripheral interface 623 connects the camera module 680 and the sensor module 690 to the processor 622 and the memory 610.

The processor 622 executes various programs and performs various functions for the portable electronic device 600, and also performs processing and control for voice communication and data communication. Also, in addition to this general function, the processor 622 executing a specific application module stored in the memory 610 and performing various functions corresponding to the executed specific application module.

The processor 622, the peripheral interface 623, and the memory controller 621 can be realized in a single chip, or in more than one IC. Herein, the thus constructed single chip is called the processor unit 620. Also, these configuration elements can be realized as a separate chips.

The communication unit 630 preferably includes the RF IC unit 631 and the baseband processing unit 632. The RF IC unit 631 transceives a radio wave. The RF IC unit 631 converts a baseband signal from the baseband processing unit 632 into a radio wave and transmits the radio wave through an antenna (not denoted by reference numeral). Or, the RF IC unit 631 converts a radio wave received through the antenna into a baseband signal and provides the baseband signal to the baseband processing unit 632. The RF IC unit 631 includes, although not illustrated, an RF transceiver, an amplifier, a tuner, an oscillator, a digital signal processor, a COding DECoding (CODEC) chip set, a Subscriber Identity Module (SIM) card and the like.

With continued reference to FIG. 6, the RF IC unit 631 communicates with a communication network and other communication devices through a radio wave. For instance, the RF IC unit 631 can communicate with a wireless network such as the Internet, an Intranet, a network, a cellular phone network, a WLAN or wireless Metropolitan Area Network (MAN) and also, can communicate with other electronic devices through wireless communication.

The wireless communication refers to communication, for example, using Time Division Multiple Access (TDMA), Global System for Mobile Communication (GSM), Enhanced Data GSM Environment (EDGE), Code Division Multiple Access (CDMA), Wideband Code Division Multiple Access (W-CDMA), Orthogonal Frequency Division Multiple Access (OFDMA), Bluetooth, Near Field Communication (NFC), Infra Red (IR) communication, RFID communication, Voice over Internet Protocol (VoIP), Wireless Fidelity (Wi-Fi), Worldwide Interoperability for Microwave Access (Wi-MAX), e-mail, instant messaging, Short Message Service (SMS) protocol, or any combination of these various communication schemes, although not limited to these aforementioned examples.

In an exemplary embodiment, the RF IC unit 631 frequency converts an RF signal received through the antenna (not denoted by reference numeral) into a baseband signal and provides the baseband signal to the baseband processing unit 632, and frequency converts a baseband signal from the baseband processing unit 632 into an RF signal and transmits the RF signal through the antenna. The baseband processing unit 632 processes a baseband signal. For example, in CDMA communication, at transmission, the baseband processing unit 632 performs a function of channel coding and spreading data to be transmitted. At reception, the baseband processing unit 632 performs a function of de-spreading and channel decoding a receive signal.

The audio IC unit 650 provides an audio interface between a user and the portable electronic device 600, together with the speaker 660 and the microphone 670. In other words, the audio IC unit 650 communicates with the user through the speaker 660 and the microphone 670. The audio IC unit 650 receives a data signal through the peripheral interface 623 of the processor unit 620, and converts the received data signal into an electric signal. The converted electric signal is forwarded to the speaker 660. The speaker 660 converts an electric signal into an audible sound wave and outputs the sound wave. The microphone 670 converts sound waves forwarded from people or other sound sources into electric signals. The audio IC unit 650 receives the thus converted electric signals from the microphone 670 into audio data signals and transmits the audio data signals to the peripheral interface 623. Through the peripheral interface 623, the audio data signal is transmitted to the memory 610 or is transmitted to the communication unit 630. The audio IC unit 650 can include a detachable earphone, headphone or headset. In the headset, output (e.g., a one-ear headphone or a two-ear headphone) and input (e.g., a microphone) functions all are even possible in some cases. The audio IC unit 650 can include a jack (not shown) providing an interface with an earphone, a headphone or a headset. The jack is called an earphone jack or headset jack.

The camera module 680 converts a captured image (e.g., a QR code) into digital data and provides the digital data to the processor 622 through the peripheral interface 623.

The sensor module 690 shown in FIG. 6, senses a signal through inertial sensors (e.g., an acceleration sensor, a gyroscope sensor, an altitude sensor and the like) and a supplementary sensor (e.g., an atmospheric pressure sensor, a geomagnetic sensor and the like), and provides the signal to the processor 622 through the peripheral interface 623.

Also, the portable electronic device 600 includes a power system (not shown) for supplying power to various configuration elements included in the portable electronic device 600. The power system can include adaptation to receive a power source (i.e., an Alternating Current (AC) or a battery), a power error detection circuit, a power converter, a power inverter, a charging device and/or a power level display device (i.e., a Light Emitting Diode (LED)). Also, the portable electronic device 600 can include a power management and control device for performing a function of generating, managing and distributing power.

Also, the portable electronic device 600 can perform various functions through touch screen (not shown) input, and/or can perform them through a separate touch pad input in place of the touch screen input. This function can use a physical input/control device (e.g., a dial or a button). The physical input/control device can be, for example, a push button for turning On/Off and locking the portable electronic device 600, a volume adjustment locker button, a ringer profile, a toggling slider switch and the like. Also, the portable electronic device 600 can perform a function of processing a voice input for activating or inactivating a predefined function through the microphone 670.

According to realization, it is undoubted that a QR code can be substituted with a bar code.

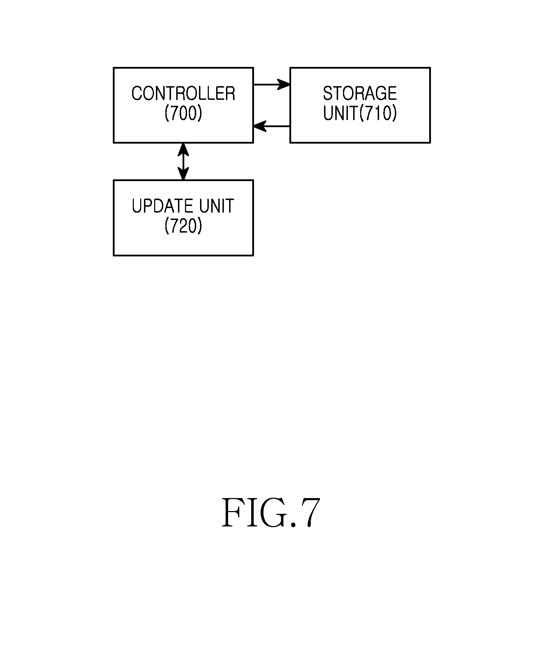

FIG. 7 illustrates an exemplary construction of a server apparatus according to an exemplary embodiment of the present invention.

Referring now to FIG. 7, a server preferably includes a controller 700, a storage unit 710, and an update unit 720. However, the server can further include additional configuration elements than illustrated and also, can be configured in a scheme different from illustrated.

The controller 700 performs the general control of the server. The controller 700 determines AP location information and terminal location information. For example, the controller 700 receives absolute location information, and AP signal information and atmospheric pressure information around a terminal, from a plurality of terminals through an interface (not shown). An absolute location is a point in which a QR code, an RF reader or a card reader is located.

The update unit 720 updates or adds the received atmospheric pressure information corresponding to the absolute location information of the terminal, and stores its result in the storage unit 710. The atmospheric pressure information corresponding to the absolute location information of the terminal is detected by sensors arranged within a predetermined range or distance from the terminal.

If a floor count is included in the absolute location information, atmospheric pressure information of the floor count is updated and stored in a database as an atmospheric pressure monitored through a sensor of the terminal.

The controller 700 determines AP location information based on the absolute location information and the surrounding (i.e. within communicative range)AP signal information. For example, the controller 700 determines AP location by estimating a signal strength of an AP varying depending on location through a combination of the absolute location information stored in a database in the storage unit 710 and the pieces of surrounding AP signal information which are collected in an absolute location.

The update unit 720 compares determined AP location information with existing AP location information stored in a database and, when there is an AP location change, updates the AP location information.

The controller 700 determines the location of the terminal using a triangulation based on surrounding AP signal information of the terminal, wherein said terminal has requested its own location information, and the controller provides determined location information of the terminal to the terminal.

The storage unit 710 stores surrounding AP signal information and atmospheric pressure information that are collected from a plurality of terminals. The above-described methods according to the present invention can be implemented in hardware, firmware or as software or computer code that is stored in a recording medium such as a CD ROM, flash, EPROM, EEPROM, RAM, a floppy disk, thumbnail drive, a hard disk, or a magneto-optical disk or computer code downloaded over a network originally stored on a remote recording medium or a non-transitory machine readable medium and on a local recording medium, and loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Finally, the claimed invention can include the use of a location information server comprising more than one server, such as a proxy server.

Further, applications can be stored in an attachable storage device accessible to an electronic device through a communication network such as the Internet, an intranet, a LAN, a WLAN, or a SAN, or a communication network configured by a combination of them. This storage device can access the electronic device through an external port.

As described above, the present invention can automatically manage wireless AP location information varying within a building without a separate update, so there is an advantage of positioning indoor AP location information of high accuracy in the environment in which the location of a wireless AP is often changed. Also, when using QR code deployment, the present invention can build an infrastructure for AP location update at a low cost.

Also, when using card reader deployment for automation in a shopping center, it is made possible to grasp shopping information of a client and a moving line based on shopping patterns, together. And, even a moving line recommended for shopping can be proposed to the client.

Also, the present invention can distinguish exact floor information because measuring altitude by an atmospheric pressure benchmarking an absolute location, not measuring altitude by an absolute atmospheric pressure.

While the invention has been shown and described with reference to certain preferred exemplary embodiments thereof, it will be understood by those skilled in the art that various changes in form and details may be made therein without departing from the spirit and scope of the invention as defined by the appended claims.

## Claims

1. A method for providing location information of a wireless Access Point (AP) in an electronic device, the method comprising:
acquiring by the electronic device via scanning or by wireless communication, absolute location information of the electronic device; and
transmitting by the electronic device to a location server AP signal information of an absolute location of the electronic device, together with the acquired absolute location information.

2. The method of claim 1, wherein the AP signal information comprises at least one of a signal strength of an AP, a Service Set IDentifier (SSID) comprising a unique name of the AP, and a Media Access Control (MAC) address.

3. The method of claim 1, wherein acquiring the absolute location information comprises recognizing a scan of a Quick Response (QR) code or a bar code, or
wherein acquiring the absolute location information includes receiving related information from a Radio Frequency (RF) reader or card reader when an RF tag or card payment event associated with the electronic device occurs.

4. The method of claim 1, further comprising receiving location information about the electronic device from the location server based on the absolute location information.

5. The method of claim 1, further comprising:
providing the AP signal information within communicative range of the absolute location to the location server , and requesting location information from the location server; and
receiving location information of the electronic device and location information within wireless range of the electronic device from the location server, and displaying the received location information in conjunction with a Geographic Information System (GIS) on a display of the electronic device.

6. A method for providing floor atmospheric pressure information of an electronic device, the method comprising:
acquiring absolute location information of the electronic device and atmospheric pressure information thereof; and
transmitting the absolute location information and atmospheric pressure information to a location server.

7. The method of claim 6, wherein acquiring the absolute location information includes recognizing a scan of a Quick Response (QR) code or a bar code, or
wherein acquiring the absolute location information comprises receiving related information from a Radio Frequency (RF) reader or card reader when an RF tag or card payment event associated with the electronic device occurs.

8. The method of claim 6, wherein acquiring the atmospheric pressure information comprises:
measuring an atmospheric pressure by a sensor coupled to the electronic device.

9. A method for updating wireless Access Point (AP) location positioning and floor information in a server, the method comprising:
receiving from a terminal at least one of an AP signal information from an AP within a communication range of an absolute location, and receiving atmospheric pressure information together with the absolute location information;
determining by a location server locations of the at least one AP based on the received absolute location information and the AP signal information within of the absolute location; and
updating a related AP location using the determined locations of the at least one AP.

10. The method of claim 9, wherein the absolute location comprises a location in which a Quick Response (QR) code, an RF reader, or a card reader is positioned.

11. The method of claim 9, wherein updating the related AP location using the determined locations of which said at least one AP comprises a plurality of Aps, and further comprises:
comparing the determined locations of the APs with previously stored locations of the APs, and determining whether an AP location update is needed; and
updating the related AP location when the AP location update is determined to be needed, updating the related AP location.

12. The method of claim 9, further comprising:
receiving by a location server a request for location information from the terminal; and
determining by the location server the location of the terminal based on AP signal information within communication range of the terminal, and providing the determined location of the terminal to the terminal.

13. An electronic device, comprising:
one or more processors;
memory; and
one or more programs, wherein the one or more programs are stored in the memory and configured to cause, when executed by the electronic device, the electronic device to perform the method of any of claims 1 to 5.

14. An electronic device, comprising:
one or more processors;
memory; and
one or more programs, wherein the one or more programs are stored in the memory and configured to cause, when executed by the electronic device, the electronic device to perform the method of any of claims 6 to 8.

15. An electronic device, comprising:
one or more processors;
memory; and
one or more programs, wherein the one or more programs are stored in the memory and configured to cause, when executed by the electronic device, the electronic device to perform the method of any of claims 9 to 12.
